Europäisches Patentamt

European Patent Office

Office européen des brevets

(11) Veröffentlichungsnummer: **0 154 684**
**A1**

(12) # EUROPÄISCHE PATENTANMELDUNG

(21) Anmeldenummer: **84113996.7**

(22) Anmeldetag: **19.11.84**

(51) Int. Cl.⁴: **B 01 D 53/34**, B 01 D 53/08

(30) Priorität: **16.12.83 DE 3345687**
**13.04.84 DE 3414044**

(43) Veröffentlichungstag der Anmeldung: **18.09.85**
**Patentblatt 85/38**

(84) Benannte Vertragsstaaten: **AT BE CH FR GB IT LI LU NL SE**

(71) Anmelder: **MANNESMANN VEBA UMWELTTECHNIK GMBH, Südstrasse 41, D-4690 Herne 2 (DE)**

(72) Erfinder: **Schnorr, Karl-Ernst, Niederaustrasse 6, D-6335 Lahnau (DE)**
Erfinder: **Riemann, Hans Helmut, Dipl.-Ing., Schattbachstrasse 26, D-4630 Bochum 1 (DE)**
Erfinder: **Vollmer, Henning, Dr.-Ing., Frauenlobstrasse 26, D-4630 Bochum 1 (DE)**
Erfinder: **Wybranietz, Rudolf, Dipl.-Ing., Hubertusstrasse, D-4350 Recklinghausen (DE)**

(74) Vertreter: **Lorenz, Eduard, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Widenmayerstrasse 23 D-8000 München 22 (DE)**

(54) **Verfahren zur Entfernung von Verunreinigungen aus Gasströmen und Filter zur Durchführung des Verfahrens.**

(57) Bei einem Verfahren zur Entfernung von Verunreinigungen aus Gasströmen, bei welchem man das Gas durch ein Filterbett leitet, in welchem sich poröse Filterpartikel befinden, wird vorgesehen, daß man als Filterpartikel Biomasse oder andere feste brennbare Stoffe verwendet, mit denen die zu entfernenden Verunreinigungen unter Bildung einer flüssigen oder festen Substanz chemisch oder biologisch oder physikalisch reagieren. Im Anschluß daran können die Filterpartikel durch Verbrennung oder Vergasung oder ähnliches energetisch genutzt werden.

## Beschreibung:

Die Erfindung betrifft ein Verfahren zur Entfernung von sauren, neutralen und/oder basischen Verunreinigungen organischer oder anorganischer Natur aus Gasströmen, bei welchem man das Gas durch ein Filterbett leitet, in welchem sich poröse Filterpartikel befinden, und ein kontinuierlich zu erneuerndes Filterbett zur Durchführung des Verfahrens.

Um Nebel oder Dämpfe von Flüssigkeiten oder Gasen aus einem Gas oder Gasgemisch herauszufiltern, sind verschiedene Techniken bekannt. Diese bestehen im Prinzip in der Trennung der Komponenten durch Ausnützung der unterschiedlichen physikalischen oder chemischen und biologischen Eigenschaften der zu trennenden Stoffe. Prinzipiell werden dabei Massekräfte, elektrische Kräfte oder Oberflächenkräfte sowie biologische und chemische Reaktionen ausgenützt.

Insbesondere zur Reinigung der Gase oder Gasgemische von festen, flüssigen, dampf- oder gasförmigen organischen und anorganischen Beimengungen sind verschiedene Möglichkeiten bekannt. Hierzu zählen das Auswaschen durch Kontakt der zu reinigenden Gasgemische mit einer geeigneten Waschflüssigkeit, das Abfackeln bei ausreichend hohem Anteil an brennbaren Beimengungen oder die Elektroabscheidung oder die biologisch wirkende Filtration.

Beim Auswaschen der zu reinigenden Gase oder Gasgemsiche gelangen durch die Waschflüssigkeit zusätzliche Verunreinigungen in den Gasstrom. Aufgrund des großen Dichteunterschiedes zwischen Gas und Waschflüssigkeit entsteht außerdem ein hoher Druckverlust, so daß ein hoher Vordruck erforderlich wird. Die Reinigung durch Elektrofilter erfordert einen relativ hohen technischen Aufwand und außerdem besteht eine starke Abhängigkeit von Temperatur, Gasmenge und Gehalt an Schwebstoffen.

Bei den statisch mechanische arbeitenden Filtern und bei statisch biologischen Filtern liegt ein großer Nachteil im Druckverlust oder sehr großem Flächenbedarf. Aus dem daraus resultierenden Rückstau neigen diese Filter bei fortschreitendem Betrieb zu Verstopfungen. Man muß daher die Filtermaterialien unter teilweise erheblichem Zeitverlust auswechseln. Durch die geringe Effizienz muß zusätzlich ein hoher Materialaufwand betrieben werden.

Der Erfindung liegt die Aufgabe zugrunde, ein Verfahren und eine Vorrichtung anzugeben, mit welchen organische und anorganische Verunreinigungen aus Gasströmen in einfacher Weise entfernt werden können, vorzugsweise in einem kontinuierlichen Verfahren.

Diese Aufgabe wird bei einem Verfahren der eingangs beschriebenen Art erfindungsgemäß dadurch gelöst, daß man als Filterpartikel Biomasse oder andere feste brennbare Stoffe verwendet, mit denen die zu entfernenden Verunreinigungen unter Bildung einer flüssigen oder festen Substanz chemisch oder biologisch reagieren oder die die Verunreinigungen lösen. In entsprechender Weise wird das eingangs beschriebene Filterbett erfindungsgemäß derart ausgebildet, daß die Filterpartikel Biomasse oder andere feste brennbare Stoffe sind, mit denen die zu entfernenden Verunreinigungen unter Bildung einer flüssigen oder festen Substanz chemisch oder biologisch reagieren oder die die Verunreinigungen lösen.

Besonders vorteilhaft ist es dabei, wenn man als Filterpartikel Biomasse oder andere feste brennbare Stoffe verwendet, die mit der zu entfernenden Verunreinigung derart reagieren, daß ein festes oder fließfähiges Reaktionsprodukt entsteht, und daß man das feste oder fließfähige Reaktionsprodukt aus dem Filterbett entfernen kann. Vorzugsweise führt man dem Filterbett in dem Maße, in dem Filterpartikelmaterial verbraucht wird, poröse Filterpartikel zu.

Man erhält auf diese Weise ein vollkontinuierliches Filterverfahren; die Notwendigkeit eines vollständigen Filteraustausches nach einer bestimmten Betriebsdauer und die Notwendigkeit einer Verfahrensunterbrechung entfallen daher.

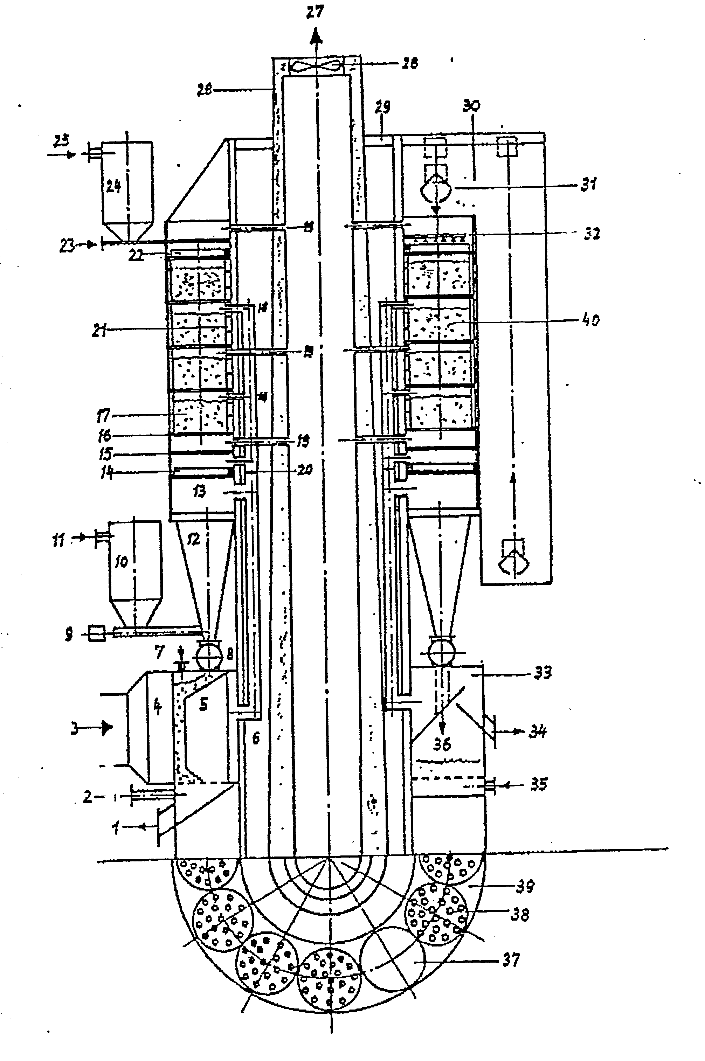

Anhand der Zeichnung werden nachstehend bevorzugte Ausführungsformen der Erfindung näher erläutert. Die Zeichnung zeigt schematisch einen Längsschnitt durch die Filteranlage gemäß der Erfindung.

Geschildert wird dieses Verfahren beispielhaft an einer Rauchgasreinigung hinter einer Feuerungsanlage. Anschließend an die Gaszuleitung 3 befindet sich ein Wärmetauscher 4, der die im Gas enthaltene, im Prozeß nicht benötigte Wärme auf eine Trocknungsstufe 5, 13 - 15, gefolgt von einer Verbrennung, Vergasung oder ähnlichem, überträgt.

Die abgekühlten Rauchgase durchströmen danach den Rauchgaskanal 6 und treten von dort in das Filterbett 17, steuerbar über eine Drosselklappe 20, ein. Nach Durchgang durch das Filterbett gelangen die gereinigten Rauchgase 27 über den Kanal 19 durch den Kamin 26 in die Atmosphäre. Ein Ventilator 28 sorgt für den notwendigen Unterdruck im Kamin.

Die Filterpartikel werden mit einem Hebeförderer 31 auf die obere Beschickungsebene 30 gebracht, hier durch einen Verteilförderer 22 auf die gesamte Filterfläche verteilt und bei Bedarf befeuchtet 32. Dem Befeuchtungsmedium können die zur Konditionierung des Filtermaterials notwendigen Zuschlagsstoffe über die Beschickung 25 und Zwischenlager 24 über Wasseranschluß 23 nach intensiver Vermischung zugeführt werden.

Die befeuchteten Filterpartikel 40 werden über die Löcher in den Böden 38 be- oder entgast. Durch Drehung des Ringes 39 mit den Siebböden 38 und dem freien Querschnitt 27 werden die Filterpartikel im freien Fall von der Beschickungsebene zur Abwurfebene 16 gefördert. Danach gelangen die Filterpartikel in die Vortrocknungszone 15 und werden von hier mit dem Kratzförderer 14 über den Abwurfschacht 13, in den Trichter 12 transportiert.

Zur Konditionierung der trockenen Masse werden über Beschickung 11, Lager 10 und Dosiereinrichtung 9 Zuschlagsstoffe zugegeben.

Über die Misch- und Dosiereinrichtung 8 werden die konditionierten Filterpartikel der thermischen Stufe 5 zugeführt.

Bei der hier vorgeschlagenen Version des Verfahrens (Vergasung der beladenen, konditionierten Filterpartikel) wird der erforderliche Sauerstoff über den Einlaß 7 zugeführt, das entstehende Schwelgas über den Auslaß 2 zu einer Verwertungsstelle gefördert. Die entstehende Asche mit den eingebundenen Schadstoffen des Rauchgases wird über die Rutsche 1 abgezogen. Eine weitere vorteilhafte Lösung der thermischen Verwertung stellt eine Wirbelschichtverbrennung 33 dar, die im rechten Teil der Skizze dargestellt
ist. Die hierbei entstehenden Rauchgase werden über Prallbleche und Heizflächen 36 in den Rauchgasreinigungskreislauf
eingeleitet. Die bei der Verbrennung entstehenden Aschebestandteile mit den eingebundenen Schadstoffen aus der
Rauchgasreinigung werden über die Rutsche 34 abgeführt.

<u>P a t e n t a n s p r ü c h e</u>

1. Verfahren zur Entfernung von sauren, neutralen und/oder
   basischen Verunreinigungen organischer oder anorganischer
   Natur aus Gasströmen, bei welchem man das Gas durch ein
   Filterbett leitet, in welchem sich poröse Filterpartikel
   befinden, d a d u r c h   g e k e n n z e i c h n e t ,
   daß man als Filterpartikel Biomasse oder andere feste
   brennbare Stoffe verwendet, mit denen die zu entfernenden
   Verunreinigungen unter Bildung einer flüssigen oder festen
   Substanz chemisch oder biologisch reagieren oder die die
   Verunreinigungen lösen, und die beladenen Filterpartikel
   einer energetischen Verwertung zugeführt werden.

2. Verfahren nach Anspruch 1, dadurch gekennzeichnet, daß
   man als Filterpartikel Biomasse oder andere feste brennbare Stoffe verwendet, die mit der zu entfernenden Verunreinigung derart reagieren, daß ein festes oder fließfähiges Reaktionsprodukt entsteht, und daß man das
   feste oder fließfähige Reaktionsprodukt aus dem Filterbett heraustransportiert oder abfließen läßt und einer
   energetischen Verwertung zuführt.

3. Verfahren nach Anspruch 1 oder 2, dadurch gekennzeichnet,
   daß die Biomasse aus Zellulose, Holzspänen, Kohlen, Torf,
   Kompost oder ähnlichen Bestandteilen besteht.

4. Verfahren nach Anspruch 3, dadurch gekennzeichnet, daß
   die Filterpartikel trocken oder angefeuchtet verwendet
   werden.

                                                    —   —

5. Verfahren nach einem der Ansprüche 1 bis 4, dadurch gekennzeichnet, daß man dem Filterbett in dem Maße, in dem Filterpartikelmaterial verbraucht wird, poröse Filterpartikel zuführt.

6. Verfahren nach einem der Ansprüche 1 bis 5, dadurch gekennzeichnet, daß den Filterpartikeln zur Konditionierung saure oder basische Zuschlagsstoffe, organische oder anorganische Verbindungen, ionenaustauschende Stoffe oder speziell gezüchtete Mikroorganismen zugegeben werden.

7. Verfahren nach einem der Ansprüche 1 bis 6, dadurch gekennzeichnet, daß die thermische Stufe als Trocknung mit anschließender Vergasung oder Verbrennung oder Pyrolyse oder Brikettierung zur Alternativbrennstoffherstellung oder ähnlichem ausgeführt wird.

8. Filterbett zur Entfernung von sauren, neutralen und/oder basischen Verunreinigungen organischer oder anorganischer Natur aus Gasströmen, in welchem sich poröse Filterpartikel befinden, dadurch gekennzeichnet, daß die Filterpartikel Biomasse oder andere feste brennbare Stoffe sind, mit denen die zu entfernenden Verunreinigungen unter Bildung einer flüssigen oder festen Substanz chemisch oder biologisch reagieren oder die Verunreinigung lösen.

9. Filterbett nach Anspruch 8, dadurch gekennzeichnet, daß die Filterpartikel derart gewählt sind, daß sie mit den Verunreinigungen unter Bildung eines festen oder fließfähigen Reaktionsproduktes reagieren.

10. Filterbett nach Anspruch 8 oder 9, dadurch gekennzeichnet, daß die Biomasse aus Zellulose, Holzspänen, Kohlen, Torf, Kompost oder ähnlichen Bestandteilen besteht.

11. Filterbett nach Anspruch 8, 9 oder 10, dadurch gekennzeichnet, daß die Filterpartikel angefeuchtet werden.

12. Filterbett nach einem der Ansprüche 8 bis 11, dadurch
gekennzeichnet, daß den Filterpartikeln zur Konditionierung saure oder basische Zuschlagsstoffe, organische
oder anorganische Verbindungen, ionenaustauschende
Stoffe oder speziell gezüchtete Mikroorganismen zugegeben werden.

13. Filterbett nach einem der Ansprüche 8 bis 12, dadurch
gekennzeichnet, daß die Biomasse durch eine Zerkleinerungs-
oder Pelletierungsstufe auf eine für das Verfahren günstige
Korngröße gebracht wird.

14. Filterbett nach einem der Ansprüche 8 bis 13, dadurch
gekennzeichnet, daß der Filter z.B. als Etagenfilter
ausgeführt werden kann und der Gaseintritt jeweils zwischen
zwei Filterebenen erfolgt.

15. Filterbett nach Anspruch 14, dadurch gekennzeichnet, daß
der Filter z.B. als kontinuierlich arbeitender Etagenfilter ausgeführt werden kann und der Gaseintritt oder
-austritt unter dem Lochboden über einem Flüssigkeitsleitblech erfolgt.

16. Vorrichtung zur Durchführung eines Verfahrens nach
einem der Ansprüche 1 bis 7, gekennzeichnet durch die
Beschreibung gemäß dem Ausführungsbeispiel.

17. Die Verwendung einer Vorrichtung nach Anspruch 16. zur
Entfernung von sauren, neutralen und/oder basischen
Verunreinigungen organischer oder anorganischer Natur
aus Gasströmen, insbesondere für eine Rauchgasreinigung.

0154684

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 321 511 (H. NOLL) <br><br> * Vollständiges Dokument * <br><br> --- | 1-4,7 11,16 17 | B 01 D 53/34 <br> B 01 D 53/08 |
| X | DE-A-2 705 533 (H. HÖLTER) <br><br> * Vollständiges Dokument * <br><br> --- | 1-4,6 12,17 | |
| A | DE-A-2 248 256 (H. HUBMER) <br><br> * Ansprüche 1,2; Figur 2 * <br><br> --- | 1-3,5 6,8-10 ,16,17 | |
| A | DE-A-2 445 315 (F. KNEER) <br><br> * Ansprüche 1,3; Figur 1 * <br><br> --- | 1-3,5 6,8-10 ,12,17 | |
| A | DE-A-2 930 232 (GERFO) <br><br> * Ansprüche 1-5; Seite 7, Zeilen 1-10 * <br><br> --- | 1,3,6 8,10, 12,14 17 | RECHERCHIERTE SACHGEBIETE (Int. Cl.4) <br><br> B 01 D 53/00 |
| A | EP-A-0 080 747 (NEDERLANDSE CENTRALE ORGANISATIE VOOR TOEGEPAST-NATUURWETENSCHAPPELIJK ONDERZOEK) <br> * Ansprüche 1,3 * <br><br> ---            -/- | 1,3,8 13 | |

Der vorliegende Recherchenbericht wurde für alle Patentansprüche erstellt.

| Recherchenort | Abschlußdatum der Recherche | Prüfer |
|---|---|---|
| BERLIN | 10-04-1985 | BERTRAM H E H |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 116 870 (DELBAG-LUFTFILTER GMBH) * Figur 1 * ----- | 14,15 | |

**EINSCHLÄGIGE DOKUMENTE**

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| BERLIN | 10-04-1985 | BERTRAM H E H |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82